# EUROPEAN PATENT APPLICATION

(11) **EP 2 747 019 A1**
(43) Date of publication of application: **25.06.2014**
(21) Application number: 13802519.2
(22) Date of filing: 29.03.2013
(51) Int. Cl.: G06Q 30/00

(54) **INFORMATION OBTAINING METHOD, APPARATUS, AND SYSTEM**

(30) Priority: 23.10.2012 CN 201210407578
(71) Applicant: Huawei Technologies Co., Ltd., Shenzhen, Guangdong 518129 (CN)
(72) Inventor: ZHANG, Baofeng, Shenzhen, Guangdong 518129 (CN); WANG, Liangwei, Shenzhen, Guangdong 518129 (CN); WEN, Jiajia, Shenzhen, Guangdong 518129 (CN)
(74) Representative: Thun, Clemens
(86) International application number: PCT/CN2013/073496
(87) International publication number: WO 2014/063468

(57) **Abstract**

The present invention discloses a method, an apparatus, and a system for acquiring information, applied in the field of information technologies and invented to push a mobile advertisement that meets a requirement of a user to the user. The method includes: acquiring a behavior pattern of a user according to acquired user data; acquiring advertisement content and a playing mode of a mobile advertisement according to the behavior pattern of the user; and playing the advertisement content according to the acquired playing mode. The present invention is mainly applied to a process of pushing a mobile advertisement.

## Description

### TECHNICAL FIELD

The present invention relates to the field of information technologies, and in particular, to a method, an apparatus, and a system for acquiring information.

### BACKGROUND

Currently, a mobile phone, as a user equipment (User Equipment, UE for short) widely applied, has been recognized by advertisers as a most promising advertisement propagation communication terminal. An advertisement propagated by using a mobile user equipment such as a mobile phone is called a mobile advertisement. An advertiser provides a user with mobile advertisements of abundant content and diversified forms on a mobile phone, and the user may acquire the mobile advertisements provided by the advertiser while using the mobile phone.

Generally two manners of pushing a mobile advertisement are included: active pushing and passive pushing. In the active pushing manner, mainly user information, such as a number segment, a location, a mobile phone model, registration information, and a configuration file of a user, is acquired, and a mobile advertisement of a corresponding type is selected according to the acquired user information and pushed to the user. For example, when the user enters a certain administrative area, an advertiser pushes a tourism advertisement or road information of the administrative area to the user. In the passive pushing manner, content that the user clicks or inputs while using a mobile phone is mainly acquired, and a mobile advertisement associated with the acquired input content is pushed to the user. For example, if the user inputs search keywords "skin care product" while browsing a web page, the advertiser pushes a mobile advertisement of a skin care product category to the user. Since both a type and pushing time of the mobile advertisement depend on the content that the user clicks or inputs, this pushing manner is called the passive pushing manner.

In a process of implementing the foregoing mobile advertisement pushing, the inventor finds that at least the following problems exist in the prior art: 1. The active pushing manner is not pertinent, so the user is likely to psychologically resist the mobile advertisement when the pushed mobile advertisement is not beneficial to the user. 2. Since the passive pushing manner is based on the content that the user clicks or inputs, the number of times of mobile advertisement pushing is quite limited when the user does not perform a clicking or inputting operation. In addition, when the user is performing repetitive operations such as application experience, the user will be bored if a same type of mobile advertisements is pushed without any difference, thereby reducing an effect of pushing the mobile advertisement.

### SUMMARY

Embodiments of the present invention provide a method, an apparatus, and a system for acquiring information, so that a mobile advertisement can be pushed to a user at an appropriate time in an appropriate manner according to a behavior of the user.

In a first aspect, an embodiment of the present invention provides a method for acquiring information, including:
acquiring, by a user equipment, a behavior pattern of a user according to acquired user data;
acquiring, by the user equipment, advertisement content and a playing mode of a mobile advertisement according to the behavior pattern of the user; and
playing, by the user equipment, the advertisement content according to the acquired playing mode.

In a second aspect, an embodiment of the present invention further provides a method for acquiring information, including:
acquiring, by a server, status data reported by a user equipment;
discovering and/or matching, by the server, a behavior pattern of a user according to the status data, to obtain a classification system modification parameter; and
sending, by the server, the classification system modification parameter to the user equipment, so that the user equipment modifies setting of a classification system according to the classification system modification parameter.

In a third aspect, an embodiment of the present invention further provides a user equipment, including:
an acquiring unit, configured to acquire a behavior pattern of a user according to acquired user data;
a searching unit, configured to acquire advertisement content and a playing mode of a mobile advertisement according to the behavior pattern of the user that is acquired by the acquiring unit; and
an executing unit, configured to play the advertisement content according to the playing mode that is acquired by the searching unit.

In a fourth aspect, an embodiment of the present invention further provides a server, including:
an acquiring unit, configured to acquire status data reported by a user equipment;
a discovering unit, configured to discover a behavior pattern of a user according to the status data that is acquired by the acquiring unit, to obtain a classification system modification parameter;
a matching unit, configured to match the behavior pattern of the user according to the status data that is acquired by the acquiring unit, to obtain the classification system modification parameter; and
a sending unit, configured to send the classification system modification parameter that is acquired by the discovering unit and the matching unit to the user equipment, so that the user equipment modifies setting of a classification system according to the classification system modification parameter.

In a fifth aspect, an embodiment of the present invention further provides a system for acquiring information, including:
the user equipment and the server described previously.

In the method, the apparatus, and the system for acquiring information according to the embodiments of the present invention, a behavior pattern of a user can be acquired according to acquired user data, then advertisement content and a playing mode that correspond to the behavior pattern are acquired, and the advertisement content is played according to the playing mode. In this way, a mobile advertisement easily acceptable to the user is selected according to a behavior of the user and pushed.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for acquiring information according to an embodiment of the present invention;
FIG. 2 is a flowchart of another method for acquiring information according to an embodiment of the present invention;
FIG. 3 is a flowchart of still another method for acquiring information according to an embodiment of the present invention;
FIG. 4 is a schematic structural diagram of a first user equipment according to an embodiment of the present invention;
FIG. 5 is a schematic structural diagram of a second user equipment according to an embodiment of the present invention;
FIG. 6 is a schematic structural diagram of a first server according to an embodiment of the present invention;
FIG. 7 is a schematic structural diagram of a second server according to an embodiment of the present invention;
FIG. 8 is a schematic structural diagram of a third server according to an embodiment of the present invention;
FIG. 9 is a schematic diagram of a first system for acquiring information according to an embodiment of the present invention;
FIG. 10 is a schematic structural diagram of a third user equipment according to an embodiment of the present invention;
FIG. 11 is a schematic structural diagram of a fourth server according to an embodiment of the present invention; and
FIG. 12 is a schematic diagram of a second system for acquiring information according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

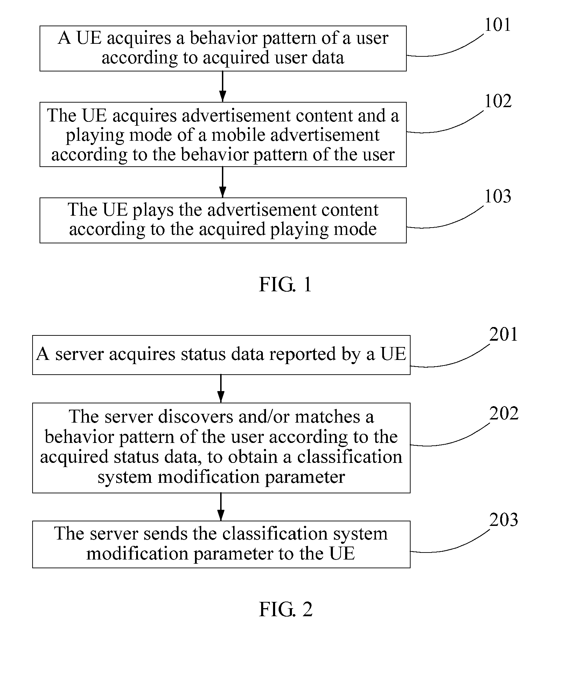

An embodiment of the present invention provides a method for acquiring information. As shown in FIG. 1, the method includes the following steps:

101. A UE acquires a behavior pattern of a user according to acquired user data.

The user data (called status data or user status data below) is user status data collected by the UE, and the status data includes location data and behavior data. The user status data collected by the UE includes but is not limited to a standby status, a program running status, and a hardware setting status of the UE. In addition, the UE may further acquire the user status data by using a detecting apparatus configured therein. The detecting apparatus includes but is not limited to a gravity sensor, an acceleration transducer, the Global Positioning System (Global Positioning System, GPS for short), a microphone, and a camera. The user status data collected by the UE by using the detecting apparatus includes but is not limited to location data, motion status data, and UE location status data of the user.

In this embodiment of the present invention, the number of the detecting apparatuses and a type of the detecting apparatus of the UE are not limited; the number of the user status data and a type of the user status data collected by the UE (or by the UE by using the detecting apparatus) is not limited; and in the subsequent description, the user status data collected by the UE should be constructed as including the user status data collected by the UE and the user status data collected by the UE by using the detecting apparatus.

The UE acquires the behavior pattern of the user according to the collected status data. The behavior pattern is a pattern of a behavior that the user may perform. Preset on the UE, the behavior pattern is used to reflect a behavior of the user performed when the UE collects the user status data. For example, the behavior pattern may be "playing a game", "riding in a car", "getting up", or the like.

The UE acquires the behavior pattern of the user from preset behavior patterns according to the collected status data. When the behavior pattern of the user has been acquired, it indicates that the user is performing this behavior pattern (for example, the user is playing a game on the UE) while the UE is collecting the status data. The status data may be a status data record or a group of status data. When the UE acquires the behavior pattern of the user from the preset behavior patterns according to a group of status data, a mapping exists between the group of status data and a certain behavior pattern. That is, a combination of all status data among the group of status data is used to describe a behavior of the user.

102. The UE acquires advertisement content and a playing mode of a mobile advertisement according to the behavior pattern of the user.

When the UE has acquired the behavior pattern of the user, the UE acquires, according to the acquired behavior pattern and preset mappings, advertisement content and a playing mode of a mobile advertisement. The advertisement content of the mobile advertisement is advertisement content that matches the behavior pattern of the user, and the playing mode of the mobile advertisement is a playing mode that matches the behavior pattern of the user. The playing mode includes but is not limited to audio playing and image playing, where the image playing is not limited to static image playing and streaming media image playing.

The advertisement content that matches the behavior pattern of the user is advertisement content that does not affect the behavior of the user and does not cause antipathy of the user while the user is ongoing with the behavior pattern of the user; and the playing mode that matches the behavior pattern of the user is a playing mode that does not affect the behavior of the user and does not cause antipathy of the user while the user is ongoing with the behavior pattern of the user.

103. The UE plays the advertisement content according to the acquired playing mode.

The UE pushes, according to the playing mode that matches the behavior pattern of the user, the advertisement content that suites the behavior of the user to the user, so as to improve an effect of pushing the mobile advertisement.

In the method for acquiring information according to this embodiment of the present invention, status data of a user can be acquired in real time, a behavior pattern of the user is acquired according to the status data of the user, and a mobile advertisement is selected according to the behavior pattern of the user and pushed. In addition, the mobile advertisement can be selected and pushed at a preset moment or according to a preset period.

In the prior art, a manner of pushing a mobile advertisement focuses on how to select and push the mobile advertisement. That is, the mobile advertisement is pushed to a user according to specific information of the user, instead of considering a psychological change of the user that comes along with a behavior change. Then antipathy of the user towards the mobile advertisement is easily caused when the mobile advertisement is pushed while the user is not willing to see the mobile advertisement. In the method for acquiring information according to this embodiment of the present invention, a behavior pattern can be acquired according to the status data of the user, advertisement content and a playing mode of the mobile advertisement are selected according to the behavior pattern, and the appropriate mobile advertisement is pushed to the user at an appropriate moment in an appropriate manner. On a basis of pushing the mobile advertisement pertinently according to individual features of the user, the mobile advertisement may be further pushed according to different moods of the user at different time, thereby improving an effect of pushing the mobile advertisement.

An embodiment of the present invention further provides a method for acquiring information. As shown in FIG. 2, the method includes the following steps:

201. A server acquires status data reported by a UE.

The server is a server on a network side, having behavior pattern discovery and matching functions. The server is configured to discover a user behavior pattern by using a method of machine learning and according to status data of a user, and match the user behavior pattern according to the status data of the user. The status data is status data collected by the UE, and includes but is not limited to location data, behavior data, motion status data, and UE location status data of a user.

202. The server discovers and/or matches a behavior pattern of the user according to the acquired status data, to obtain a classification system modification parameter.

When the UE fails to acquire the behavior pattern according to the status data, it indicates that the UE does not store a behavior pattern corresponding to the status data. In this case, the UE reports the status data to the server. The server analyzes, by using the method of machine learning and according to the status data reported by the UE, whether a new behavior pattern exists; or the server matches a historical behavior pattern of the user according to the status data reported by the UE, or matches a behavior pattern of another user. When the server has discovered or matched the behavior pattern of the user, the server sends a classification system modification parameter to the UE. The classification system modification parameter is used to add the behavior pattern that has been discovered or matched by the server and does not exist on the UE to a classification system of the UE. The classification system modification parameter may be specifically a piece of control signaling, and the signaling includes the behavior pattern and a user identifier of the UE. The server sends the control signaling that carries the behavior pattern to the specific UE according to the user identifier.

It should be noted that the status data acquired by the server may be one status data record or multiple status data records; the server may acquire one or more status data records reported by one UE, or may acquire multiple status data records reported by multiple UEs; and the server may discover and/or match a user behavior pattern separately for each UE according to one or more status data records reported by the UE, or discover and/or match a new common user behavior pattern for the multiple UEs according to the multiple status data records reported by the multiple UEs.

When the server can discover and/or match a user behavior pattern separately for each UE according to one or more status data records reported by the UE, processes in which the server simultaneously discovers or matches user behavior patterns of multiple UEs are independent of one another, and the matching a user behavior pattern for the UE does not rely on status data of other UEs. However, in a process of learning a user behavior pattern (that is, in a process of discovering, by the server, a new behavior pattern according to user status data), status data collected from multiple UEs may be clustered for statistics and then behavior pattern learning is performed according to a clustering result. That is, the server may discover a new common user behavior pattern for the multiple UEs according to the multiple status data records reported by the multiple UEs.

In this embodiment of the present invention, the new behavior pattern is so called as compared to a behavior pattern stored in the UE. For a certain UE, the new behavior pattern may be a behavior pattern that the server matches in status data of another UE, or may be a behavior pattern that is not stored on the server but discovered by the server according to the status data reported by the UE.

203. The server sends the classification system modification parameter to the UE.

The server sends, according to the user identifier, the classification system modification parameter that carries the user behavior pattern discovered or matched for the UE to the UE, so that the UE modifies setting of the classification system according to the classification system modification parameter, and the UE adds the behavior pattern discovered or matched by the server to the classification system.

The UE acquires the classification system modification parameter, parses the classification system modification parameter to obtain the user behavior pattern, and adds the user behavior pattern to the classification system. After modifying parameter setting of the classification system according to the classification system modification parameter, the UE can match the behavior pattern corresponding to the user status data, and acquire advertisement content and a playing mode of a mobile advertisement according to the matched pattern.

In the method for acquiring information according to this embodiment of the present invention, a behavior pattern that does not exist on a UE can be learned (discovered or matched) according to user status data reported by the UE, and then the learned behavior pattern is added to a classification system of the UE by modifying parameters of the classification system of the UE, so that the UE selects a mobile advertisement for the user according to the added behavior pattern and pushes the mobile advertisement to the user.

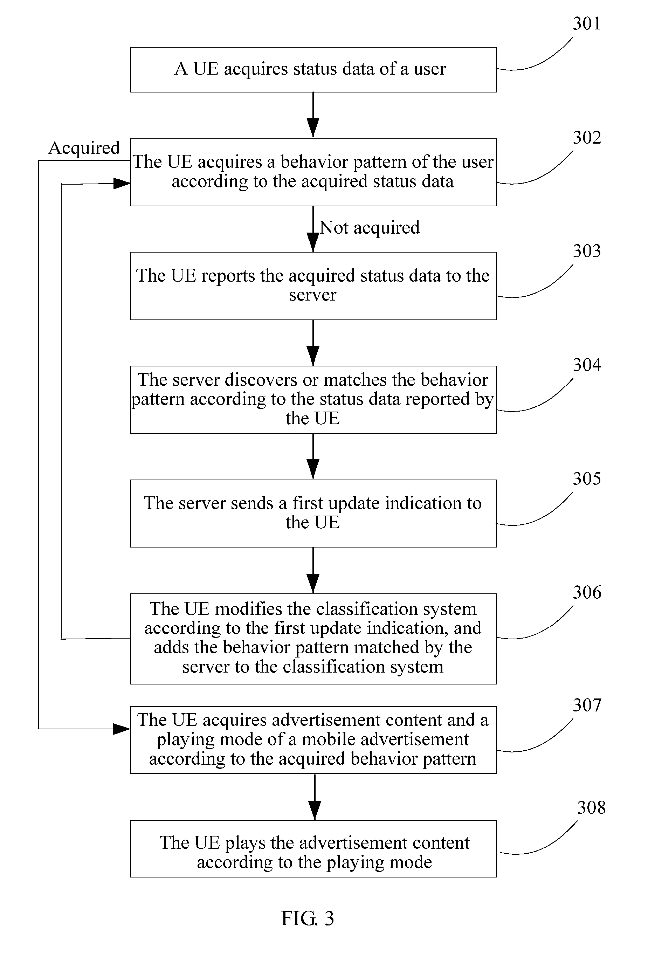

The following describes an embodiment of the present invention in detail with reference to the method embodiments shown in FIG. 1 and FIG. 2. As shown in FIG. 3, the method includes the following steps:

301. A UE acquires status data of a user.

The status data may be specifically: whether a screen of the UE is locked, whether the UE is powered off, whether an application program is running on the UE, whether a voice or information service is ongoing on the UE, longitude and latitude coordinates of the UE, a location status of the UE relative to a horizontal plane, motion acceleration variation of the UE, or the like. In this embodiment of the present invention, only examples are given for status data that the UE may acquire, and the foregoing examples shall not be construed as a limitation to practical use.

302. The UE acquires a behavior pattern of the user according to the acquired status data.

The status data required for the UE to acquire a behavior pattern of the user may be one or more records (that is, a group of status data). In this embodiment of the present invention, it is assumed that the UE acquires the behavior pattern of the user according to a group of status data. The group of status data is used to describe a behavior of the user. Each status data record among the group of status data carries a timestamp, and the timestamp is used to indicate a value of a moment when the UE acquires the status data record. A combination of features of all status data among a group of status data is used to describe a behavior of a user at a certain moment (or a certain time period), but values of moments when the UE acquires the multiple status data records are not strictly consistent and the UE may simultaneously or sequentially acquire some status data records. Therefore, in terms of describing a behavior of a user, in order to differentiate behaviors of a same user at different moments (or in different time periods), the UE needs to acquire timestamps carried in the status data and group the acquired status data according to the timestamps of the status data. That is, multiple status data records are determined as a group of status data, where a difference between values of moments identified by timestamps of the multiple status data records does not exceed a preset time difference. For example, the preset time difference is 60 seconds and the UE acquires one status data record every 11 seconds stating from 8:00:00 in the morning one day. Then a maximum difference between any two timestamps of six status data records acquired at 8:00:55 does not exceed the preset time difference 60 seconds, while a difference between a timestamp of a seventh status data record acquired at 8:01:06 and a timestamp of a first status data record acquired at 8:00:00 exceeds 60 seconds (and reaches 66 seconds). Therefore, the six status data records sequentially acquired starting from 8:00:00 form a group of status data.

In this embodiment of the present invention, when a group of status data acquired by the UE is sufficient to describe a behavior of the user, the UE acquires a corresponding behavior pattern according to the group of status data. When data in the group of acquired status data is not sufficient to describe a behavior of the user, the UE buffers the acquired status data; and when a combination of one or several status data records subsequently acquired and the group of acquired status data is sufficient to describe a behavior of the user, the UE combines the status data subsequently acquired and the group of acquired status data into one group of status data as an input value of a classification system to acquire the corresponding behavior pattern (provided that a difference between values of moments identified by timestamps of the status data that is acquired by the UE does not exceed the preset time difference).

The UE acquires, according to the group of acquired status data and the classification system, the behavior pattern of the user. Mappings between status data and behavior patterns are preset in the classification system. The classification system may store multiple behavior patterns and multiple groups of status data. In this embodiment of the present invention, the number of behavior patterns is not limited to strict consistency with the number of groups of status data, and a relationship between the status data (a group of status data according to this embodiment of the present invention) and the behavior pattern is not limited to one-to-one mapping.

Step 302 is described by using an example of acquiring the behavior pattern of the user according to a group of status data. An implementation manner of acquiring, when the UE acquires a status data record, the behavior pattern of the user according to the status data record is the same as the implementation manner of acquiring the behavior pattern of the user according to a group of status data. That is, the UE acquires, according to the acquired status data record and the classification system, the behavior pattern of the user. In this case, a mapping between status data and a behavior pattern preset in the classification system is a mapping between one behavior pattern and one status data record. Similarly, in this embodiment of the present invention, the number of behavior patterns is not limited to strict consistency with the number of status data records, and the relationship between the status data and the behavior pattern is not limited to a one-to-one mapping.

Step 307 is executed when the UE has acquired, according to the acquired status data and the classification system, the behavior pattern; or step 303 is executed when the UE fails to acquire, according to the acquired status data and the classification system, the behavior pattern. A reason why the UE fails to acquire the behavior pattern includes the following: (1) the status data acquired by the UE is not sufficient to describe a behavior of the user; or (2) the classification system of the UE does not store a behavior pattern corresponding to the status data acquired by the UE.

Optionally, each time the UE acquires a behavior pattern, the UE may record the number of times of acquiring the behavior pattern and then reports the number of times of acquiring the behavior pattern to the server. The server on a network side counts the number of times that in a preset period the behavior pattern is acquired. If the number of times of acquiring the behavior pattern is lower than a preset first threshold, the server sends a classification system deletion parameter to the UE. The classification system deletion parameter may be specifically a piece of control signaling, and the control signaling carries the behavior pattern, a deletion instruction, and a user identifier. Then the UE deletes the behavior pattern from the classification system according to the classification system deletion parameter. For example, in a one-month period, the number of times of acquiring, by the UE, a behavior pattern "running" is 2, and the first threshold is 4. Then the UE deletes the behavior pattern "running" from the classification system so as to save a storage space.

303. The UE reports the acquired status data to the server.

A manner of reporting, by the UE, the status data may be: reporting the status data one by one; or reporting the status data group by group. An occasion of reporting, by the UE, the status data may be: reporting immediately after the status data is acquired; or not reporting until a certain time after the status data is acquired. Each status data record carries a user identifier of the UE that has acquired the status data record, and the server identifies the status data of a same user according to the user identifier in the status data.

In this embodiment of the present invention, the UE may report, when no behavior pattern is matched according to the status data, the acquired status data to the server; or may report, when a behavior pattern has been matched according to the status data, the acquired status data to the server, so that the server performs clustering statistics of status data of multiple users and discovers a new behavior pattern according to a statistical result.

304. The server discovers or matches the behavior pattern according to the status data reported by the UE.

A manner of discovering, by the server, the behavior pattern includes:
1) summarizing the behavior pattern of the user from the acquired status data by using unsupervised learning (Unsupervised Learning), to obtain the classification system modification parameter; or
2) analyzing the acquired status data by using semi-supervised learning (Semi-Supervised Learning) or supervised learning (Supervised Learning) and combining preset behavior pattern marking data, to obtain the classification system modification parameter; or
3) summarizing the behavior pattern of the user by using heuristic learning (Heuristic Learning or Heuristic Learning) and combining manual interaction, to obtain the classification system modification parameter.

The UE may discover, according to a group of status data reported by a certain UE, a new behavior pattern for the user of the UE; or may discover, according to multiple groups of status data reported by multiple UEs, a new common behavior pattern for users of the multiple UEs.

A manner of matching, by the server, the behavior pattern includes: matching a group of acquired status data with a known pattern, to obtain the classification system modification parameter, where the known pattern is a behavior pattern once occurring on the user, such as a behavior pattern once stored in the classification system of the UE but deleted later; or the known pattern is a behavior pattern once occurring on another user, such as a behavior pattern that the server has discovered for the another user. The group of status data is formed by multiple status data records. User identifiers of the multiple status data records may be the same or different. When they are the same, the server matches a behavior pattern for a certain UE. When they are different, the server matches a common behavior pattern for users of multiple UEs. However, it should be noted that all the multiple status data records need to meet the following condition: no matter whether the user identifiers of the multiple status data records are the same, a difference between values of moments identified by their timestamps does not exceed the preset time difference.

For the UE, the new behavior pattern is a behavior pattern not yet stored in the classification system of the UE; and for the server, the new behavior pattern may be a historical behavior pattern of the user stored on the server, or a behavior pattern of another user. The server sends the classification system modification parameter to the UE, so that the UE adds the behavior pattern matched by the server to the classification system.

305. The server sends a first update instruction to the UE.

The first update instruction carries the classification system modification parameter, and is used to instruct the UE to add the behavior pattern matched by the server to the classification system.

306. The UE modifies the classification system according to the first update instruction, and adds the behavior pattern matched by the server to the classification system.

Optionally, in step 305, the server may further send a second update instruction to the UE. The second update instruction carries advertisement content and a playing mode that correspond to the new behavior pattern, and is used to instruct the UE to update a preset mapping table and establish a mapping between the new behavior pattern, the advertisement content, and the playing mode in the preset mapping table. The updating, by the UE, the preset mapping table according to the second update instruction is specifically: adding, by the UE, the new behavior pattern to the preset mapping table, and adding the mapping between the new behavior pattern, the acquired advertisement content, and the acquired playing mode.

After step 306 is executed, the UE executes step 302 to acquire again, according to the acquired status data and the modified classification system, the behavior pattern of the user.

307. The UE acquires advertisement content and a playing mode of a mobile advertisement according to the acquired behavior pattern.

The UE acquires advertisement content and a playing mode of a mobile advertisement from the preset mapping table according to the acquired behavior pattern. The preset mapping table is used to describe mappings between behavior patterns, advertisement content of mobile advertisements, and playing modes of the mobile advertisements.

In this embodiment of the present invention, the playing mode of the mobile advertisement includes audio playing and image playing, and the image playing further includes but is not limited to: playing a static or dynamic (video stream) image on a screen saver interface, on a system desktop interface, or on an application interface.

308. The UE plays the advertisement content according to the playing mode.

The advertisement content played by the UE is advertisement content corresponding to the behavior pattern. For example, when the user is playing a game, the UE plays advertisement content about a game; or when the user is in a sports activity, the UE plays advertisement content about a sports product. The playing mode of the advertisement content played by the UE is a playing mode that suites the behavior of the user. For example, when the user is in a sports activity, it is inconvenient for the user to check a mobile phone screen and then the playing mode is audio playing. For time to play the advertisement content, the UE may play immediately after the UE acquires the advertisement content and the playing mode according to the preset mapping table; or not play until a certain time passes after the UE acquires the advertisement content and the playing mode.

In this embodiment of the present invention, the server may periodically send advertisement content of various playing modes to the UE; and for advertisement content of a cosmetic product, the server may send the advertisement content of the cosmetic product in a form of an audio, a video stream, or a static screen saver image to the UE.

In this embodiment of the present invention, the status data refers to a group of status data. When the group of status data includes only one status data record, the status data refers to the status data record. In addition, in this embodiment of the present invention, a mobile phone is used as an example of the UE for the description, and the UE may further be another electronic device in a practical application.

The following specifically describes the implementation manner shown in FIG. 3 by combining two applications scenarios:

### Scenario 1

The UE acquires the status data of the user: The UE detects that the screen is always locked; the GPS detects that the user has a displacement of 800 meters every two minutes; and a gyroscope detects at a frequency of 30 seconds that acceleration of the UE is stable and does not change.

The UE acquires, according to a group of status data formed by the foregoing three status data records and the classification system, the behavior pattern of the user at this time, which is "sitting in a daze in a car".

The UE acquires, according to the behavior pattern "sitting in a daze in a car" and the preset mapping table, advertisement content about a certain snack brand and a playing mode that is video playing with screen unlocking.

The UE unlocks the screen and plays a video advertisement about the snack brand.

### Scenario 2

The UE acquires the status data of the user: The UE detects that the user powers on the UE at 7:30 every morning; after the power-on, the GPS continuously detects that the user does not have any displacement; a gyroscope continuously detects that acceleration of the UE is zero; and the UE detects that the user will open a news application after the power-on.

The UE fails to acquire, according to a group of status data formed by the foregoing four status data records and the classification system, the behavior pattern of the user.

The UE reports the group of status data formed by the foregoing four status data records to the server on the network side. The server on the network side matches a behavior pattern for the user according to the group of status data.

The behavior pattern matched by the server on the network side is "watching news after breakfast". The server on the network side sends the classification system modification parameter to the UE, and at the same time sends a mobile advertisement about a wealth investment product of audio playing to the UE.

The UE adds the behavior pattern "watching news after breakfast" to the classification system according to the classification system modification parameter, adds a mapping between the behavior pattern "watching news after breakfast" and the mobile advertisement about the wealth investment product of audio playing to the preset mapping table, and then acquires the behavior pattern according to the group of status data.

The UE acquires, according to the acquired behavior pattern "watching news after breakfast" and the updated preset mapping table, the mobile advertisement about the wealth investment product of audio playing.

The UE plays the mobile advertisement about the wealth investment product by using a loudspeaker.

In the method for acquiring information according to this embodiment of the present invention, a mobile advertisement that caters to a behavior of a user can be pushed to the user at an appropriate time in an appropriate manner according to different behaviors of the user at different time. In the prior art, however, different mobile advertisements can only be pushed to different users according to different identities (by means of identifying UE information or the like) of the users, instead of considering a requirement of pushing advertisements according to different behaviors of a user at different time, and therefore a user may be easily bored with a mobile advertisement. In the method for acquiring information according to this embodiment of the present invention, psychological resistance of a user to a mobile advertisement can be minimized, thereby improving an effect of pushing the mobile advertisement.

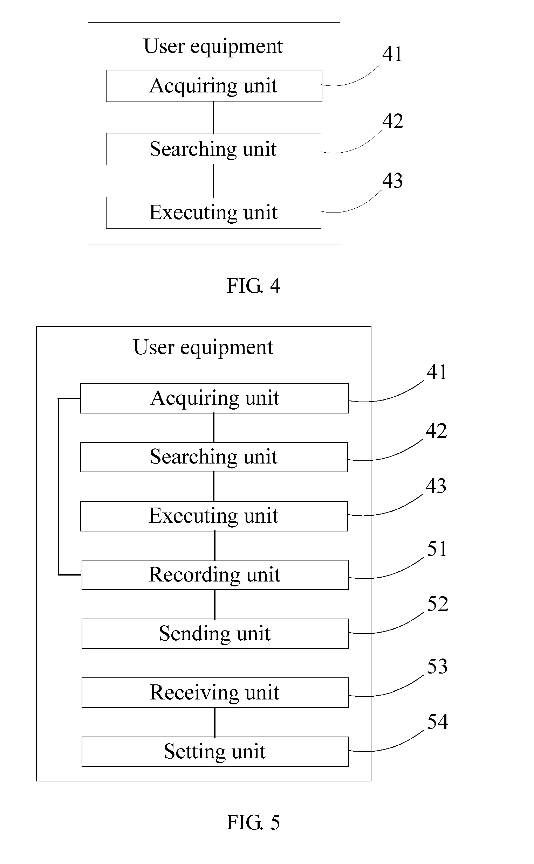

With reference to implementation of the method embodiment shown in FIG. 1, an embodiment of the present invention provides a user equipment, configured to implement the method embodiment shown in FIG. 1. As shown in FIG. 4, the user equipment includes: an acquiring unit 41, a searching unit 42, and an executing unit 43, where:
the acquiring unit 41 is configured to acquire a behavior pattern of a user according to acquired user data;
the searching unit 42 is configured to acquire advertisement content and a playing mode of a mobile advertisement according to the behavior pattern of the user that is acquired by the acquiring unit 41; and
the executing unit 43 is configured to play the advertisement content according to the playing mode that is acquired by the searching unit 42.

Further, the user data used by the acquiring unit 41 to acquire the behavior pattern of the user is status data of the user. The acquiring unit 41 is specifically configured to acquire, according to the acquired status data and a classification system, the behavior pattern of the user, where mappings between status data and behavior patterns are preset in the classification system; and
the searching unit 42 is specifically configured to acquire, according to the behavior pattern of the user that is acquired by the acquiring unit 41 and a preset mapping table, the advertisement content and the playing mode of the mobile advertisement, where the preset mapping table is used to represent a mapping between a behavior pattern, advertisement content, and a playing mode.

Further, the status data used by the acquiring unit 41 to acquire the behavior pattern of the user is at least one status data record, and each status data record carries a timestamp, where the timestamp is used to identify a value of a moment when the status data is acquired. The acquiring unit 41 is specifically configured to:
acquire the timestamp carried in the status data;
determine at least two status data records as a group of status data, where a difference between values of moments identified by timestamps of the at least two status data records does not exceed a preset time difference; and
acquire, according to the determined group of status data and the classification system, the behavior pattern of the user.

Further, as shown in FIG. 5, the user equipment further includes: a recording unit 51, a sending unit 52, a receiving unit 53, and a setting unit 54.

The recording unit 51 is configured to record the number of times that in a preset period the behavior pattern is acquired by the acquiring unit 41.

The sending unit 52 is configured to report the number of times of acquiring the behavior pattern that is recorded by the recording unit 51 to a server on a network side, so that the server on the network side determines, according to the received number of times of acquiring the behavior pattern, whether to instruct the user equipment to delete the behavior pattern from the classification system.

The sending unit 52 is further configured to report the status data to the server on the network side, so that the server on the network side discovers and/or matches the behavior pattern according to the status data, where the status data carries a user identifier and the user identifier is used to uniquely identify the user equipment.

The receiving unit 53 is configured to receive a first update instruction sent by the server on the network side, where the first update instruction carries a classification system modification parameter, the classification system modification parameter is used to add a new behavior pattern to the classification system, and the new behavior pattern is a behavior pattern not included in the classification system before a parameter is modified.

The receiving unit 53 is further configured to receive a second update instruction sent by the server on the network side, where the second update instruction carries advertisement content and a playing mode that correspond to the new behavior pattern.

The setting unit 54 is configured to modify setting of the classification system according to the first update instruction received by the receiving unit 53, and update the preset mapping table according to the second update instruction received by the receiving unit 53.

With the user equipment for acquiring information according to this embodiment of the present invention, a mobile advertisement that caters to a behavior of a user can be pushed to the user at an appropriate time in an appropriate manner according to different behaviors of the user at different time. In the prior art, however, different mobile advertisements can only be pushed to different users according to different identities (by means of identifying UE information or the like) of the users, instead of considering a requirement of pushing advertisements according to different behaviors of a user at different time, and therefore a user may be easily bored with a mobile advertisement. In the user equipment for acquiring information according to this embodiment of the present invention, psychological resistance of a user to a mobile advertisement can be minimized, thereby improving an effect of pushing the mobile advertisement.

In this embodiment of the present invention, the user equipment includes but is not limited to a computer or a tablet computer; the acquiring unit 41 and the searching unit 42 may be a processor; the executing unit 43 may be a screen or an acoustic amplifier; the recording unit 51 may be a memory unit; the sending unit 52 may be a radio frequency transmit antenna; the receiving unit 53 may be a radio frequency receive antenna; and the setting unit 54 may be an electronic unit with an erasure function.

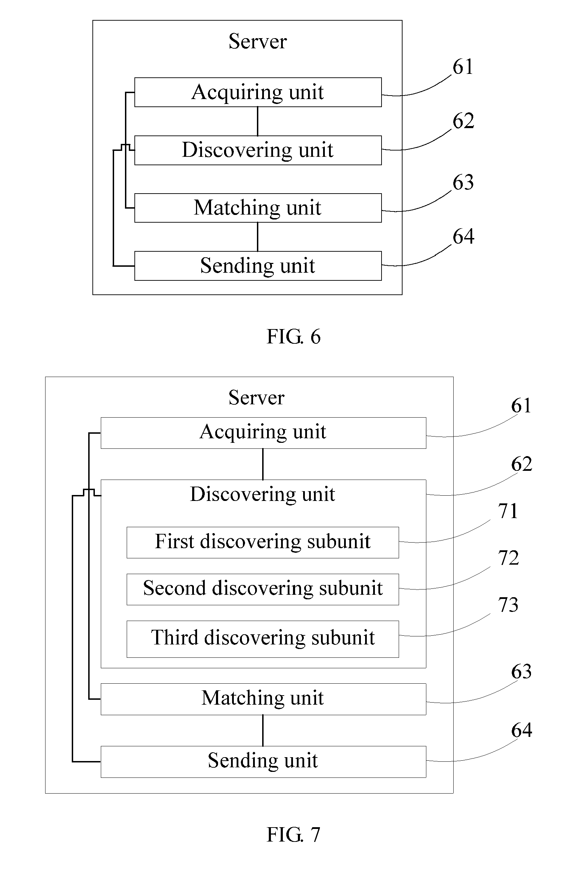

With reference to implementation of the method embodiment shown in FIG. 2, an embodiment of the present invention provides a server, configured to implement the method embodiment shown in FIG. 2. As shown in FIG. 6, the server includes: an acquiring unit 61, a discovering unit 62, a matching unit 63, and a sending unit 64, where:
the acquiring unit 61 is configured to acquire status data reported by a user equipment;
the discovering unit 62 is configured to discover a behavior pattern of a user according to the status data that is acquired by the acquiring unit 61, to obtain a classification system modification parameter;
the matching unit 63 is configured to match the behavior pattern of the user according to the status data that is acquired by the acquiring unit 61, to obtain the classification system modification parameter; and
the sending unit 64 is configured to send the classification system modification parameter that is acquired by the discovering unit 62 and the matching unit 63 to the user equipment, so that the user equipment modifies setting of a classification system according to the classification system modification parameter.

Further, the acquiring unit 61 is specifically configured to acquire the status data and a user identifier carried in the status data, where the user identifier is used to uniquely identify the user equipment; and
the discovering unit 62 is specifically configured to discover, according to status data with a same user identifier, a behavior pattern of a user identified by the user identifier; or discover a common behavior pattern of all users according to status data with different user identifiers.

Further, as shown in FIG. 7, the discovering unit 62 specifically includes:
a first discovering subunit 71, configured to summarize the behavior pattern of the user from the status data by using unsupervised learning Unsupervised Learning, to obtain the classification system modification parameter; or
a second discovering subunit 72, configured to analyze the status data by using semi-supervised learning Semi-Supervised Learning or supervised learning Supervised Learning and combining preset behavior pattern marking data, to obtain the classification system modification parameter; or
a third discovering subunit 73, configured to summarize the behavior pattern of the user from the status data by using heuristic learning Heuristic Learning and combining manual interaction, to obtain the classification system modification parameter; and
the matching unit 73 is specifically configured to match the status data acquired by the acquiring unit 71 with a known pattern, to obtain the classification system modification parameter, where the known pattern is a behavior pattern once occurring on the user or a behavior pattern once occurring on another user.

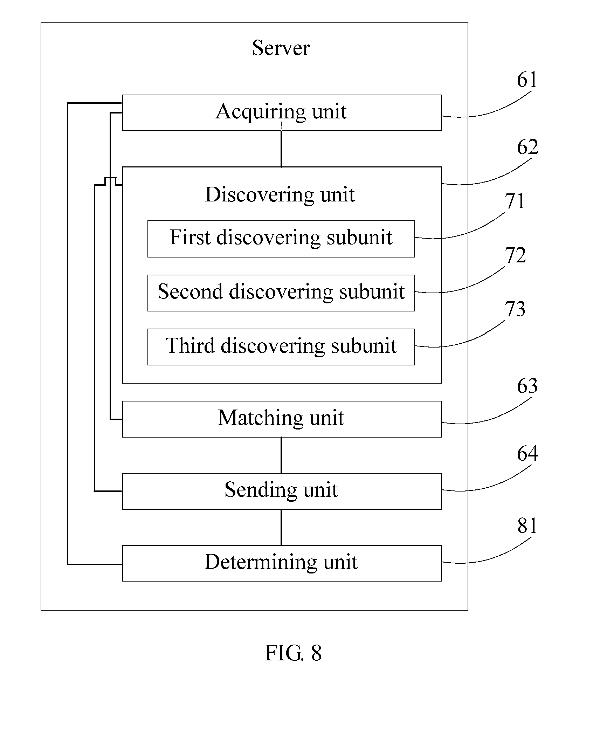

Further, as shown in FIG. 8, the server further includes:
a determining unit 81, configured to determine whether the sending unit 64 has sent the classification system modification parameter to the user equipment; and
the sending unit 64 is specifically configured to send, when the determining unit 81 determines that the sending unit 64 does not yet send the classification system modification parameter to the user equipment, a first update instruction to the user equipment, where the first update instruction carries the classification system modification parameter.

Further, the acquiring unit 61 is further configured to acquire advertisement content and a playing mode that correspond to the behavior pattern; and
the sending unit 64 is further configured to send a second update instruction to the user equipment, where the second update instruction carries the advertisement content and the playing mode that are acquired by the acquiring unit 61 and correspond to the behavior pattern, the second update instruction is used to instruct the user equipment to update a preset mapping table, and the preset mapping table is used to represent a mapping between a behavior pattern, advertisement content, and a playing mode.

Further, the acquiring unit 61 is further configured to receive the number of times of acquiring a same behavior pattern reported by the user equipment;
the determining unit 81 is further configured to determine whether the number of times that in a preset period the behavior pattern is acquired by the acquiring unit 61 is lower than a first threshold; and
the sending unit 64 is further configured to send, when the determining unit 81 determines that the number of times of acquiring the behavior pattern is lower than the first threshold, a classification system deletion parameter to the user equipment, where the classification system deletion parameter is used to instruct the user equipment to delete the behavior pattern from the classification system.

The server provided in this embodiment of the present invention is located on a network side and is capable of providing a behavior pattern for a UE according to user status data reported by the UE, so that the UE selects a mobile advertisement for the user according to the behavior pattern and pushes the mobile advertisement.

In this embodiment of the present invention, the acquiring unit 61 may be a radio frequency receive antenna; the discovering unit 62 and the matching unit 63 may be a processor; and the sending unit 64 may be a radio frequency transmit antenna.

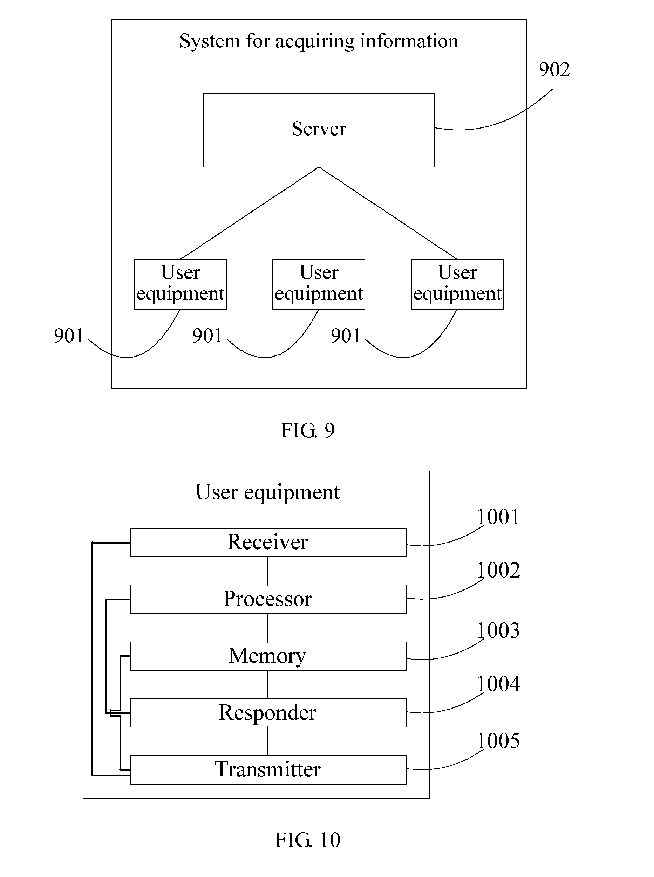

With reference to implementation of the embodiments shown in FIG. 4 to FIG. 8, an embodiment of the present invention further provides a system for acquiring information. As shown in FIG. 9, the system includes: a user equipment 901 and a server 902, where:
the user equipment 901 is the user equipment shown in either FIG. 4 or FIG. 5, and configured to acquire a behavior pattern of a user according to acquired user data; acquire advertisement content and a playing mode of a mobile advertisement according to the behavior pattern of the user; and play the advertisement content according to the acquired playing mode; and
the server 902 is the server shown in any one of FIG. 6 to FIG. 8, and configured to acquire status data reported by the user equipment 901; discover and/or match a behavior pattern of a user according to the status data, to obtain a classification system modification parameter; and send the classification system modification parameter to the user equipment 901, so that the user equipment 901 modifies setting of a classification system according to the classification system modification parameter.

In the system for acquiring information according to this embodiment of the present invention, a UE is capable of acquiring a behavior pattern of a user according to status data of the user, and a mobile advertisement easily acceptable to the user is pushed to the user according to the behavior pattern of the user. When the UE fails to acquire the behavior pattern, the UE may report acquired status data to a server, so that the server matches a behavior pattern according to the status data and delivers the matched behavior pattern to the UE. In this way, psychological resistance of a user to a mobile advertisement is reduced, thereby improving an effect of pushing the mobile advertisement.

With reference to implementation of the method embodiment shown in FIG. 1, an embodiment of the present invention further provides a user equipment, configured to implement the method embodiment shown in FIG. 1. As shown in FIG. 10, the user equipment includes: a receiver 1001, a processor 1002, a memory 1003, a responder 1004, and a transmitter 1005, where:
the receiver 1001 is configured to receive user data;
the processor 1002 is configured to acquire a behavior pattern of a user according to the user data acquired by the receiver 1001;
the memory 1003 is configured to store advertisement content and a playing mode of a mobile advertisement;
the processor 1002 acquires the advertisement content and the playing mode of the mobile advertisement from the memory 1003 according to the behavior pattern of the user; and
the responder 1004 is configured to play the advertisement content according to the playing mode that is acquired by the processor 1002.

Further, the user data used by the processor 1002 to acquire the behavior pattern of the user is status data of the user. The processor 1002 is specifically configured to:
acquire, according to the acquired status data and a classification system, the behavior pattern of the user, where mappings between status data and behavior patterns are preset in the classification system; and
acquire, according to the acquired behavior pattern of the user and a preset mapping table, the advertisement content and the playing mode of the mobile advertisement from the memory 1003, where the preset mapping table is used to represent a mapping between a behavior pattern, advertisement content, and a playing mode.

Further, the status data used by the processor 1002 to acquire the behavior pattern of the user is at least one status data record, and each status data record carries a timestamp, where the timestamp is used to identify a value of a moment when the status data is acquired. The processor 1002 is specifically configured to:
acquire the timestamp carried in the status data;
determine at least two status data records as a group of status data, where a difference between values of moments identified by timestamps of the at least two status data records does not exceed a preset time difference; and
acquire, according to the determined group of status data and the classification system, the behavior pattern of the user.

Further, the memory 1003 is further configured to record the number of times that in a preset period the behavior pattern is acquired by the processor 1002; and
the transmitter 1005 is configured to report the number of times of acquiring the behavior pattern that is recorded by the memory 1003 to a server on a network side, so that the server on the network side determines, according to the received number of times of acquiring the behavior pattern, whether to instruct the user equipment to delete the behavior pattern from the classification system.

The transmitter 1005 is further configured to report the status data acquired by the receiver 1001 to the server on the network side, so that the server on the network side discovers and/or matches the behavior pattern according to the status data, where the status data carries a user identifier and the user identifier is used to uniquely identify the user equipment;
the receiver 1001 is further configured to receive a first update instruction sent by the server on the network side, where the first update instruction carries a classification system modification parameter, the classification system modification parameter is used to add a new behavior pattern to the classification system, and the new behavior pattern is a behavior pattern not included in the classification system before a parameter is modified;
the receiver 1001 is further configured to receive a second update instruction sent by the server on the network side, where the second update instruction carries advertisement content and a playing mode that correspond to the new behavior pattern; and
the processor 1002 is further configured to modify setting of the classification system according to the first update instruction received by the receiver 1001, and update the preset mapping table according to the second update instruction received by the receiver 1001.

With the user equipment for acquiring information according to this embodiment of the present invention, a mobile advertisement that caters to a behavior of a user can be pushed to the user at an appropriate time in an appropriate manner according to different behaviors of the user at different time. In the prior art, however, different mobile advertisements can only be pushed to different users according to different identities (by means of identifying UE information or the like) of the users, instead of considering a requirement of pushing advertisements according to different behaviors of a user at different time, and therefore a user may be easily bored with a mobile advertisement. In the user equipment for acquiring information according to this embodiment of the present invention, psychological resistance of a user to a mobile advertisement can be minimized, thereby improving an effect of pushing the mobile advertisement.

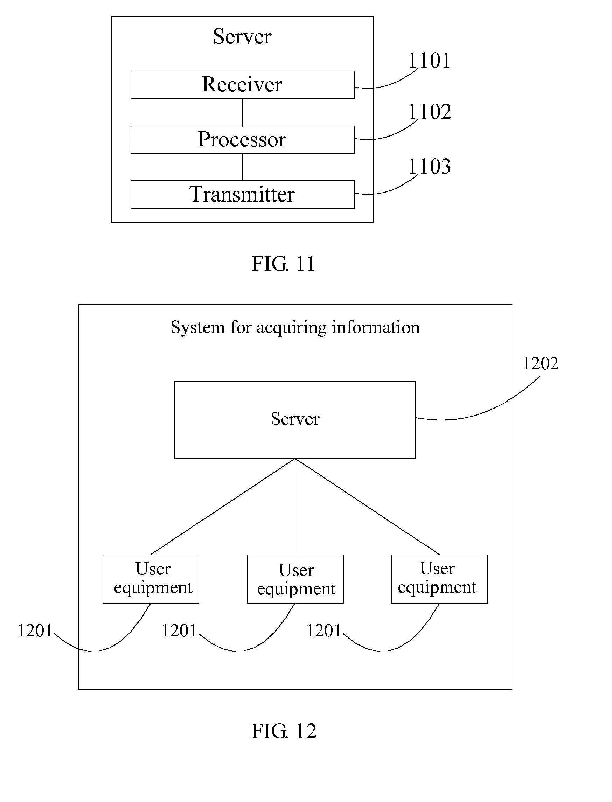

With reference to implementation of the method embodiment shown in FIG. 2, an embodiment of the present invention further provides a server, configured to implement the method embodiment shown in FIG. 2. As shown in FIG. 11, the server includes: a receiver 1101, a processor 1102, and a transmitter 1103, where:
the receiver 1101 is configured to acquire status data reported by a user equipment;
the processor 1102 is configured to discover a behavior pattern of a user according to the status data that is acquired by the receiver 1101, to obtain a classification system modification parameter;
the processor 1102 is configured to match the behavior pattern of the user according to the status data that is acquired by the receiver 1101, to obtain the classification system modification parameter; and
the transmitter 1103 is configured to send the classification system modification parameter acquired by the processor 1102 to the user equipment, so that the user equipment modifies setting of a classification system according to the classification system modification parameter.

Further, the receiver 1101 is specifically configured to acquire the status data and a user identifier carried in the status data, where the user identifier is used to uniquely identify the user equipment; and
the processor 1102 is specifically configured to discover, according to status data with a same user identifier, a behavior pattern of a user identified by the user identifier; or discover a common behavior pattern of all users according to status data with different user identifiers.

Further, the processor 1102 is specifically configured to:
summarize the behavior pattern of the user from the status data by using unsupervised learning Unsupervised Learning, to obtain the classification system modification parameter; or
analyze the status data by using semi-supervised learning Semi-Supervised Learning or supervised learning Supervised Learning and combining preset behavior pattern marking data, to obtain the classification system modification parameter; or
summarize the behavior pattern of the user from the status data by using heuristic learning Heuristic Learning and combining manual interaction, to obtain the classification system modification parameter.

The processor 1102 is further specifically configured to match the status data acquired by the receiver 1101 with a known pattern, to obtain the classification system modification parameter, where the known pattern is a behavior pattern once occurring on the user or a behavior pattern once occurring on another user.

Further, the processor 1102 is further configured to determine whether the transmitter 1103 has sent the classification system modification parameter to the user equipment; and
the transmitter 1103 is specifically configured to send, when the processor 1102 determines that the transmitter 1103 does not yet send the classification system modification parameter to the user equipment, a first update instruction to the user equipment, where the first update instruction carries the classification system modification parameter.

Further, the receiver 1101 is further configured to acquire advertisement content and a playing mode that correspond to the behavior pattern; and
the transmitter 1103 is further configured to send a second update instruction to the user equipment, where the second update instruction carries the advertisement content and the playing mode that are acquired by the receiver 1101 and correspond to the behavior pattern, the second update instruction is used to instruct the user equipment to update a preset mapping table, and the preset mapping table is used to represent a mapping between a behavior pattern, advertisement content, and a playing mode.

Further, the receiver 1101 is further configured to receive the number of times of acquiring a same behavior pattern reported by the user equipment;
the processor 1102 is further configured to determine whether the number of times that in a preset period the behavior pattern is acquired by the receiver 1101 is lower than a first threshold; and
the transmitter 1103 is further configured to send, when the processor 1102 determines that the number of times of acquiring the behavior pattern is lower than the first threshold, a classification system deletion parameter to the user equipment, where the classification system deletion parameter is used to instruct the user equipment to delete the behavior pattern from the classification system.

The server provided in this embodiment of the present invention is located on a network side and is capable of providing a behavior pattern for a UE according to user status data reported by the UE, so that the UE selects a mobile advertisement for the user according to the behavior pattern and pushes the mobile advertisement.

With reference to implementation of the embodiments shown in FIG. 10 and FIG. 11, an embodiment of the present invention further provides a system for acquiring information. As shown in FIG. 12, the system includes: a user equipment 1201 and a server 1202, where:
the user equipment 1201 is the user equipment shown in FIG. 10, and configured to acquire a behavior pattern of a user according to acquired user data; acquire advertisement content and a playing mode of a mobile advertisement according to the behavior pattern of the user; and play the advertisement content according to the acquired playing mode; and
the server 1202 is the server shown in FIG. 11, and configured to acquire status data reported by the user equipment 1201; discover and/or match a behavior pattern of a user according to the status data, to obtain a classification system modification parameter; and send the classification system modification parameter to the user equipment 1201, so that the user equipment 1201 modifies setting of a classification system according to the classification system modification parameter.

In the system for acquiring information according to this embodiment of the present invention, a UE is capable of acquiring a behavior pattern of a user according to status data of the user, and a mobile advertisement easily acceptable to the user is pushed to the user according to the behavior pattern of the user. When the UE fails to acquire the behavior pattern, the UE may report acquired status data to a server, so that the server matches a behavior pattern according to the status data and delivers the matched behavior pattern to the UE. In this way, psychological resistance of a user to a mobile advertisement is reduced, thereby improving an effect of pushing the mobile advertisement.

It can be clearly understood by a person skilled in the art that, for convenient and brief description, division of the foregoing function modules is taken as an example for illustration, in actual implementation, the foregoing functions may be implemented by different modules according to the need, that is, the internal structure of the apparatus may be divided into different function modules to implement all or part of the functions described above. For a detailed working process of the foregoing system, apparatus and unit, reference may be made to the corresponding process in the method embodiments, and details will not be described herein again.

In the several embodiments provided in the present application, it should be understood that the disclosed system, apparatus, and method may be implemented in other manners. For example, the described apparatus embodiment is merely exemplary. For example, the division of the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into a processor, or each of the units may exist alone physically, or two or more units are integrated into a unit. The integrated unit may be implemented in a form of hardware, or may be implemented in a form of a software functional unit.

When the integrated unit are implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, or a network device) or a processor (processor) to perform all or a part of steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subj ect to the protection scope of the claims.

## Claims

1. A method for acquiring information, comprising:
acquiring, by a user equipment, a behavior pattern of a user according to acquired user data;
acquiring, by the user equipment, advertisement content and a playing mode of a mobile advertisement according to the behavior pattern of the user; and
playing, by the user equipment, the advertisement content according to the acquired playing mode.

2. The method according to claim 1, wherein the user data is status data of the user;
the acquiring, by a user equipment, a behavior pattern of a user according to acquired user data specifically comprises:
acquiring, by the user equipment according to the acquired status data and a classification system, the behavior pattern of the user, wherein mappings between status data and behavior patterns are preset in the classification system; and
the acquiring, by the user equipment, advertisement content and a playing mode of a mobile advertisement according to the behavior pattern of the user specifically comprises:
acquiring, by the user equipment according to the behavior pattern of the user and a preset mapping table, the advertisement content and the playing mode of the mobile advertisement, wherein the preset mapping table is used to represent a mapping between a behavior pattern, advertisement content, and a playing mode.

3. The method according to claim 2, wherein the status data is at least one status data record, each status data record carries a timestamp, and the timestamp is used to identify a value of a moment when the status data is acquired; and
when the status data is at least two status data records, the acquiring, by the user equipment, according to the acquired status data and a classification system, the behavior pattern of the user comprises:
acquiring, by the user equipment, timestamps carried in the status data;
determining, by the user equipment, at least two status data records as a group of status data, wherein a difference between values of moments identified by timestamps of the at least two status data records does not exceed a preset time difference; and
acquiring, by the user equipment according to the group of status data and the classification system, the behavior pattern of the user.

4. The method according to claim 3, further comprising:
recording, by the user equipment, the number of times that in a preset period the behavior pattern is acquired, and reporting the recorded number of times of acquiring the behavior pattern to a server on a network side, so that the server on the network side determines, according to the received number of times of acquiring the behavior pattern, whether to instruct the user equipment to delete the behavior pattern from the classification system.

5. The method according to claim 4, further comprising:
reporting, by the user equipment, the status data to the server on the network side, so that the server on the network side discovers and/or matches the behavior pattern according to the status data, wherein the status data carries a user identifier and the user identifier is used to uniquely identify the user equipment;
receiving, by the user equipment, a first update instruction sent by the server on the network side, wherein the first update instruction carries a classification system modification parameter, the classification system modification parameter is used to add a new behavior pattern to the classification system, and the new behavior pattern is a behavior pattern not comprised in the classification system before a parameter is modified;
receiving, by the user equipment, a second update instruction sent by the server on the network side, wherein the second update instruction carries advertisement content and a playing mode that correspond to the new behavior pattern; and
modifying, by the user equipment, setting of the classification system according to the first update instruction, and/or updating the preset mapping table according to the second update instruction.

6. The method according to any one of claims 1 to 5, wherein the status data comprises location data and behavior data.

7. A method for acquiring information, comprising:
acquiring, by a server, status data reported by a user equipment;
discovering and/or matching, by the server, a behavior pattern of a user according to the status data, to obtain a classification system modification parameter; and
sending, by the server, the classification system modification parameter to the user equipment, so that the user equipment modifies setting of a classification system according to the classification system modification parameter.

8. The method according to claim 7, wherein the acquiring, by a server, status data reported by a user equipment specifically comprises:
acquiring, by the server, the status data and a user identifier carried in the status data, wherein the user identifier is used to uniquely identify the user equipment; and
the discovering, by the server, a behavior pattern of a user according to the status data specifically comprises:
discovering, by the server according to status data with a same user identifier, a behavior pattern of a user identified by the user identifier; or discovering a common behavior pattern of all users according to status data with different user identifiers.

9. The method according to claim 8, wherein the discovering, by the server, a behavior pattern of a user according to the status data, to obtain a classification system modification parameter specifically comprises:
summarizing, by the server, the behavior pattern of the user from the status data by using unsupervised learning Unsupervised Learning, to obtain the classification system modification parameter; or
analyzing, by the server, the status data by using semi-supervised learning Semi-Supervised Learning or supervised learning Supervised Learning and combining preset behavior pattern marking data, to obtain the classification system modification parameter; or
summarizing, by the server, the behavior pattern of the user from the status data by using heuristic learning Heuristic Learning and combining manual interaction, to obtain the classification system modification parameter; and
the matching, by the server, a behavior pattern of a user according to the status data specifically comprises:
matching, by the server, the status data with a known pattern, to obtain the classification system modification parameter, wherein the known pattern is a behavior pattern once occurring on the user or a behavior pattern once occurring on another user.

10. The method according to claim 9, wherein before the sending, by the server, the classification system modification parameter to the user equipment, the method further comprises:
determining, by the server, whether the classification system modification parameter has been sent to the user equipment; and
the sending, by the server, the classification system modification parameter to the user equipment specifically comprises:
sending, by the server, a first update instruction that carries the classification system modification parameter to the user equipment when the server does not yet send the classification system modification parameter to the user equipment.

11. The method according to claim 10, wherein after the discovering and/or matching, by the server, a behavior pattern of a user according to the status data, the method further comprises:
acquiring, by the server, advertisement content and a playing mode that correspond to the behavior pattern; and
sending, by the server, a second update instruction to the user equipment, wherein the second update instruction carries the advertisement content and the playing mode that correspond to the behavior pattern, the second update instruction is used to instruct the user equipment to update a preset mapping table, and the preset mapping table is used to represent a mapping between a behavior pattern, advertisement content, and a playing mode.

12. The method according to claim 11, further comprising:
receiving, by the server, the number of times of acquiring a same behavior pattern reported by the user equipment, and determining whether the number of times that in a preset period the behavior pattern is acquired is lower than a first threshold; and
sending, by the server when the number of times of acquiring the behavior pattern is lower than the first threshold, a classification system deletion parameter to the user equipment, wherein the classification system deletion parameter is used to instruct the user equipment to delete the behavior pattern from the classification system.

13. The method according to any one of claims 7 to 12, wherein the status data comprises location data and behavior data.

14. A user equipment, comprising:
an acquiring unit, configured to acquire a behavior pattern of a user according to acquired user data;
a searching unit, configured to acquire advertisement content and a playing mode of a mobile advertisement according to the behavior pattern of the user that is acquired by the acquiring unit; and
an executing unit, configured to play the advertisement content according to the playing mode that is acquired by the searching unit.

15. The user equipment according to claim 14, wherein the user data is status data of the user, the acquiring unit is specifically configured to acquire, according to the acquired status data and a classification system, the behavior pattern of the user, wherein mappings between status data and behavior patterns are preset in the classification system; and
the searching unit is specifically configured to acquire, according to the behavior pattern of the user that is acquired by the acquiring unit and a preset mapping table, the advertisement content and the playing mode of the mobile advertisement, wherein the preset mapping table is used to represent a mapping between a behavior pattern, advertisement content, and a playing mode.

16. The user equipment according to claim 15, wherein the status data is at least one status data record, each status data record carries a timestamp, the timestamp is used to identify a value of a moment when the status data is acquired, and the acquiring unit is specifically configured to:
determine at least two status data records as a group of status data, wherein a difference between values of moments identified by timestamps of the at least two status data records does not exceed a preset time difference; and
acquire, according to the group of status data determined by the determining subunit and the classification system, the behavior pattern of the user.

17. The user equipment according to claim 16, further comprising:
a recording unit, configured to record the number of times that in a preset period that the behavior pattern is acquired by the acquiring unit; and
a sending unit, configured to report the number of times of acquiring the behavior pattern that is recorded by the recording unit to a server on a network side, so that the server on the network side determines, according to the received number of times of acquiring the behavior pattern, whether to instruct the user equipment to delete the behavior pattern from the classification system.

18. The user equipment according to claim 17, wherein the user equipment further comprises a receiving unit and a setting unit;
the sending unit is further configured to report the status data that carries a user identifier used to uniquely identify the user equipment to the server on the network side, so that the server on the network side discovers and/or matches the behavior pattern according to the status data;
the receiving unit is configured to receive a first update instruction sent by the server on the network side, wherein the first update instruction carries a classification system modification parameter, the classification system modification parameter is used to add a new behavior pattern to the classification system, and the new behavior pattern is a behavior pattern not comprised in the classification system before a parameter is modified;
the receiving unit is further configured to receive a second update instruction sent by the server on the network side, wherein the second update instruction carries advertisement content and a playing mode that correspond to the new behavior pattern; and
the setting unit is configured to modify setting of the classification system according to the first update instruction received by the receiving unit, and update the preset mapping table according to the second update instruction received by the receiving unit.

19. A server, wherein the server is a server on a network side, comprising:
an acquiring unit, configured to acquire status data reported by a user equipment;
a discovering unit, configured to discover a behavior pattern of a user according to the status data that is acquired by the acquiring unit, to obtain a classification system modification parameter;
a matching unit, configured to match the behavior pattern of the user according to the status data that is acquired by the acquiring unit, to obtain the classification system modification parameter; and
a sending unit, configured to send the classification system modification parameter that is acquired by the discovering unit and the matching unit to the user equipment, so that the user equipment modifies setting of a classification system according to the classification system modification parameter.

20. The server according to claim 19, wherein the acquiring unit is specifically configured to acquire the status data and a user identifier carried in the status data, wherein the user identifier is used to uniquely identify the user equipment; and
the discovering unit is specifically configured to discover, according to status data with a same user identifier, a behavior pattern of a user identified by the user identifier; or discover a common behavior pattern of all users according to status data with different user identifiers.

21. The server according to claim 20, wherein the discovering unit specifically comprises:
a first discovering subunit, configured to summarize the behavior pattern of the user from the status data by using unsupervised learning Unsupervised Learning, to obtain the classification system modification parameter; or
a second discovering subunit, configured to analyze the status data by using semi-supervised learning Semi-Supervised Learning or supervised learning Supervised Learning and combining preset behavior pattern marking data, to obtain the classification system modification parameter; or
a third discovering subunit, configured to summarize the behavior pattern of the user from the status data by using heuristic learning Heuristic Learning and combining manual interaction, to obtain the classification system modification parameter; and
the matching unit is specifically configured to match the status data acquired by the acquiring unit with a known pattern, to obtain the classification system modification parameter, wherein the known pattern is a behavior pattern once occurring on the user or a behavior pattern once occurring on another user.

22. The server according to claim 21, further comprising:
a determining unit, configured to determine whether the sending unit has sent the classification system modification parameter to the user equipment; and
the sending unit is specifically configured to send, when the determining unit determines that the sending unit does not yet send the classification system modification parameter to the user equipment, a first update instruction to the user equipment, wherein the first update instruction carries the classification system modification parameter.

23. The server according to claim 22, wherein the acquiring unit is further configured to acquire advertisement content and a playing mode that correspond to the behavior pattern; and
the sending unit is further configured to send a second update instruction to the user equipment, wherein the second update instruction carries the advertisement content and the playing mode that are acquired by the acquiring unit and correspond to the behavior pattern, the second update instruction is used to instruct the user equipment to update a preset mapping table, and the preset mapping table is used to represent a mapping between a behavior pattern, advertisement content, and a playing mode.

24. The server according to claim 23, wherein the acquiring unit is further configured to receive the number of times of acquiring a same behavior pattern reported by the user equipment;
the determining unit is further configured to determine whether the number of times that in a preset period the behavior pattern is acquired by the acquiring unit is lower than a first threshold; and
the sending unit is further configured to send, when the determining unit determines that the number of times of acquiring the behavior pattern is lower than the first threshold, a classification system deletion parameter to the user equipment, wherein the classification system deletion parameter is used to instruct the user equipment to delete the behavior pattern from the classification system.

25. A system for acquiring information, comprising:
the user equipment according to any one of claims 14 to 18; and
the server according to any one of claims 19 to 24.
